# FASCICULE DE BREVET EUROPEEN

(11) **EP 0 833 435 B1**
(45) Date de publication et mention de la délivrance du brevet: **12.03.2003**
(21) Numéro de dépôt: 97810702.7
(22) Date de dépôt: 24.09.1997
(51) Int. Cl.: H02P 7/00, E06B 9/70, H02H 11/00

(54) **Dispositif de commande pour moteur asynchrone de store ou volet roulant**
Steuerungsvorrichtung für einen einen Vorhang oder ein Rolladen antreibenden Asynchronmotor
Control device for asynchronous motor driving a blind or a roller shutter

(30) Priorité: 30.09.1996 FR 9611857
(43) Date de publication de la demande: 01.04.1998
(73) Titulaire: SOMFY, F-74300 Cluses (FR)
(72) Inventeur: Cheron, Eric, 74440 Taninges (FR); Motte, Emeric, Saint Martin/Arve, 74700 Sallanches (FR)
(74) Mandataire: Meylan, Robert Maurice

(56) Documents cités:
- EP-A- 0 439 422
- FR-A- 2 671 129

## Description

Dispositif de commande pour moteur asynchrone à deux sens de rotation utilisé pour l'entraînement d'un store ou volet roulant se déplaçant au moins approximativement verticalement, comprenant un point de commande équipé de contacts Montée et Descente actionnables manuellement et dont l'actionnement assure la rotation du moteur dans le sens désiré, un boîtier de commande et d'alimentation, contenant une unité logique de traitement, entre le point de commande et le moteur, des moyens de commutation commandés par l'unité logique de traitement pour l'alimentation de l'un ou l'autre des enroulements du moteur et des moyens d'établissement d'un sens de rotation du moteur correspondant respectivement aux ordres de Montée et Descente.

Dans la plupart des installations connues comprenant un store, un volet roulant ou une porte commandée par un moteur asynchrone à deux sens de rotation, les enroulements correspondant à chacun des sens de rotation sont reliés à l'alimentation électrique par l'intermédiaire des contacts du point de commande repérés par des indications "Montée" et "Descente". Il importe donc que lors du câblage, les contacts Montée et Descente soient reliés chacun à l'enroulement dont l'alimentation entraîne une rotation du moteur de façon à provoquer effectivement une montée et une descente du store ou du volet roulant. Or, la montée et la descente du store ou du volet roulant ne dépend pas seulement du repérage correct des conducteurs lors du branchement, mais également de l'orientation du moteur. Ce moteur peut en effet prendre deux positions symétriques, selon qu'il est installé d'un côté ou de l'autre de l'embrasure dans laquelle est monté le store ou le volet roulant, l'effet obtenu étant soit une montée, soit une descente, selon la position du moteur, pour un même sens de rotation de celui-ci. Il est dès lors généralement nécessaire de procéder à une mise sous tension et à un essai avant de procéder au branchement définitif. Une telle manipulation est une perte de temps et par ailleurs elle n'est pas toujours facilement possible, compte tenu de l'accès parfois très difficile au moteur.

Le brevet FR 2 671 129 du demandeur décrit un dispositif de commande comportant, entre le point de commande et le moteur, un boîtier de commande et d'alimentation contenant une unité logique de traitement dans laquelle est mémorisé un programme d'inversion de sens de rotation du moteur. La mise en oeuvre de ce programme d'inversion est assurée au point de commande par un contact supplémentaire dont l'activation, en même temps que le contact Stop, entraîne l'enregistrement, par l'intelligence de l'automatisme, de l'inversion de la relation ordre/commande. Afin que ce contact supplémentaire ne soit pas actionné par inadvertance il est caché derrière un cache, facilement ouvrable, du boîtier du point de commande. Ce contact supplémentaire n'est en outre pas destiné à être actionné par l'utilisateur mais par un homme du métier, c'est-à-dire l'installateur. Or la présence d'un homme du métier lors de la mise sous tension est contraignante, car elle correspond fréquemment à un retour sur le chantier. En effet, cet homme du métier aura bien souvent installé sa motorisation un certain temps avant que la basse tension soit disponible pour d'éventuels tests.

La présente invention a pour but de réaliser un dispositif de commande capable de s'auto-configurer, c'est-à-dire un dispositif de commande capable d'apprendre quel est le sens de rotation du moteur correspondant à l'ordre donné par l'utilisateur, cet apprentissage ne devant pas nécessiter l'intervention d'un homme du métier.

Le dispositif de commande selon l'invention est caractérisé en ce que les moyens d'établissement d'un sens de rotation du moteur comprennent des moyens de reconnaissance du sens de déplacement du store ou volet roulant par la mesure d'une grandeur représentative de la vitesse de rotation du moteur et, dans l'unité logique de traitement, une mémoire de type EEPROM pour l'enregistrement de l'ordre de sens de rotation à donner au moteur en réponse à un ordre émanant d'un point de commande et un processeur programmé pour comparer le sens de déplacement reconnu avec l'ordre émanant du point de commande et pour inverser, si nécessaire, le sens de rotation enregistré pour cet ordre.

Ainsi, lors de la première mise sous tension de l'installation, il suffit à l'utilisateur de donner un ordre quelconque, de montée ou de descente, pour que le moteur du dispositif de commande réponde correctement à l'ordre donné.

L'invention utilise le fait que le moteur fournit un effort plus grand à l'enroulement qu'au déroulement et que par conséquent tourne moins vite à l'enroulement qu'au déroulement.

La grandeur représentative de la vitesse de rotation du moteur peut être, par exemple, le temps mis par le store ou volet roulant pour effectuer un déplacement significatif ou la mesure du déplacement du store ou volet roulant pendant un temps significatif. Dans ces deux modes d'exécution les moyens de mise en oeuvre sont simples.

Ces deux modes d'exécution seront décrits ci-après, à titre d'exemple, en relation avec le dessin annexé.

La figure 1 est une vue très schématique d'un volet roulant et de son dispositif de commande.

La figure 2 représente le tube d'enroulement avec son moteur d'entraînement et l'unité logique de traitement.

La figure 3 représente l'organigramme du programme du premier mode d'exécution.

La figure 4 représente l'organigramme d'une variante de ce premier mode d'exécution.

La figure 5 représente l'organigramme du second mode d'exécution.

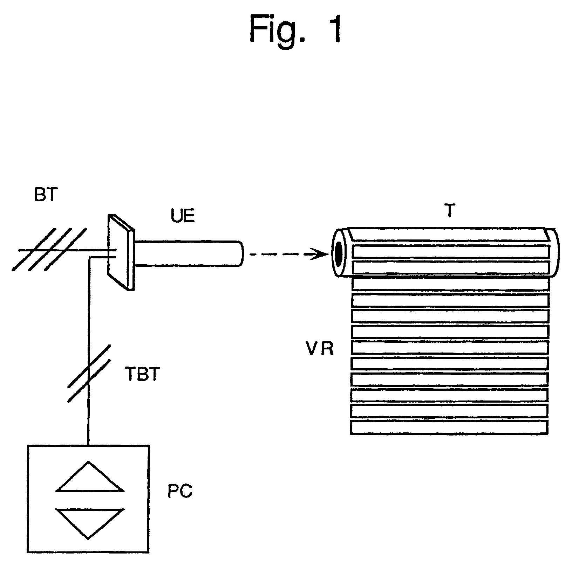

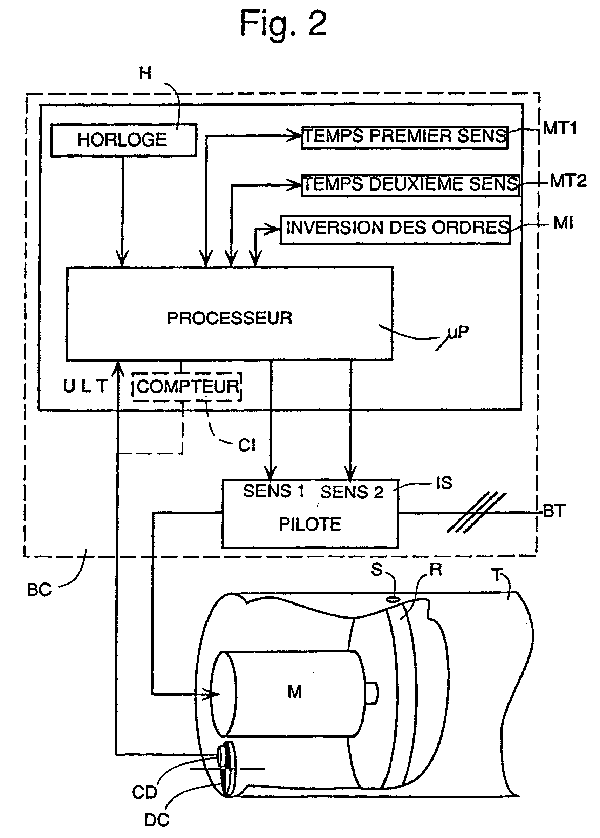

L'installation représentée schématiquement à la figure 1 comprend un tube d'enroulement T sur lequel vient s'enrouler un volet roulant VR et dans lequel est monté une unité d'entraînement UE pour l'entraînement du tube T en rotation. Cette unité d'entraînement UE comprend un moteur asynchrone monophasé M (figure 2) et une intelligence de commande constituée d'une unité logique de traitement ULT (figure 2). Le moteur M est alimenté en basse tension monophasée par un câble de trois fils repéré BT, tandis que l'ULT est relié par un câble à deux fils TBT à un point de commande PC équipé d'un contact de Montée et d'un contact de Descente. L'ULT et ses interfaces sont montées dans un boîtier de commande BC associé au moteur M.

A la figure 2 on distingue le tube d'enroulement T dans lequel est monté le moteur M, plus précisément un motoréducteur dont l'arbre de sortie entraîne une roue d'entraînement R fixée en un point S au tube d'enroulement T. A l'extrémité du tube d'enroulement représentée est en outre monté un dispositif de comptage du nombre de tours et fractions de tour effectués par le tube d'enroulement. Ce dispositif de comptage est de type optoélectronique bien connu. Il est constitué essentiellement d'un disque codeur C entraîné en rotation par le tube d'enroulement T et d'une cellule photoélectrique CD reliée à l'ULT. Le nombre de tours et fractions de tour effectués par le tube d'enroulement est une valeur représentative du déplacement du volet roulant.

L'ULT comporte un processeur µP, une horloge H constituée d'un compteur de temps réel initialisable, une mémoire MT1 de type RAM pour la mémorisation d'un temps de premier sens de rotation, une mémoire MT2 de type RAM pour la mémorisation d'un temps de deuxième sens de rotation et une mémoire MI de type EEPROM pour la mémorisation de l'inversion des ordres Montée et Descente. Entre l'ULT et le moteur M est en outre disposée une interface IS pour l'application de la tension d'alimentation au moteur M de manière correspondant au sens de rotation déterminé par l'ULT.

Le schéma de la figure 2 est valable pour le premier mode d'exécution et sa variante, qui ne diffèrent l'un de l'autre que par la programmation du processeur.

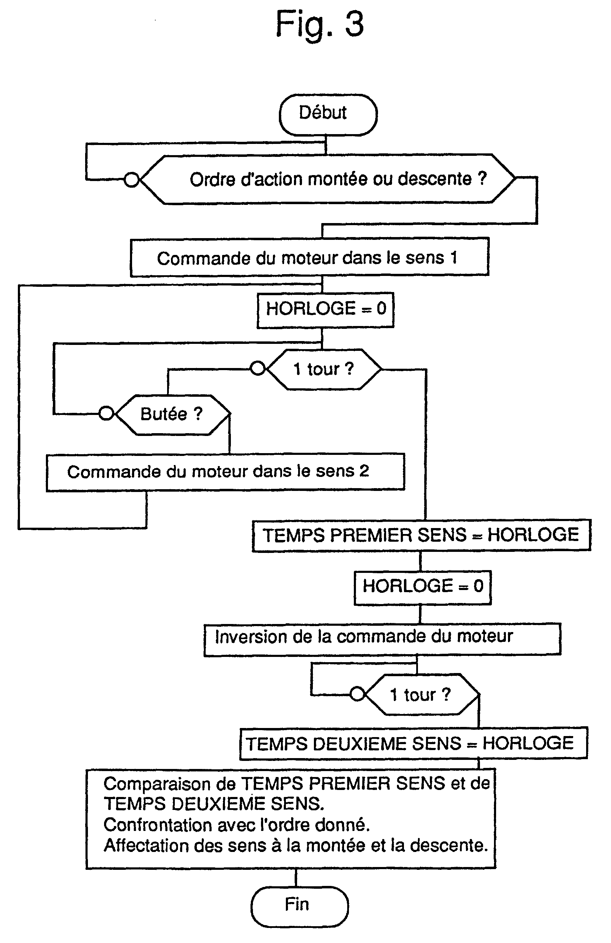

Selon le premier mode d'exécution, on mesure le temps mis par le volet roulant pour effectuer un déplacement significatif en montée et en descente et l'on compare ces temps, le temps le plus court correspondant à la descente et le temps le plus long à la montée. L'organigramme du programme correspondant est représenté la figure 3.

Cet organigramme sera parcouru à l'aide d'un exemple. Supposons que l'utilisateur donne un ordre de montée. A la réception de cet ordre, l'ULT ordonne un mouvement dans le sens 1 et initialise l'horloge H. Supposons tout d'abord que le volet roulant a effectué un déplacement significatif déterminé, correspondant en l'occurrence à un tour du tube d'enroulement T, sans rencontrer de butée. Le déplacement s'interrompt alors et l'état du compteur de temps horloge est sauvegardé dans la mémoire MT1 qui mémorise le temps premier sens. Le processeur initialise à nouveau l'horloge et ordonne au moteur de tourner dans l'autre sens, c'est-à-dire dans le deuxième sens. Après avoir effectué à nouveau le déplacement significatif, le volet roulant s'arrête et l'état du compteur de temps horloge est à nouveau sauvegardé, cette fois dans la mémoire MT2 qui mémorise le temps deuxième sens.

Le processeur compare le temps premier sens avec le temps deuxième sens, puis confronte le résultat de cette comparaison avec l'ordre de montée qu'il a reçu. Les machines asynchrones ne tournant pas à la même vitesse selon qu'elles sont motrices ou génératrices, le temps mis par le moteur pour enrouler le volet roulant est plus grand que le temps mis par le moteur pour dérouler le volet roulant qui entraîne alors le moteur.

Par conséquent, si le temps premier sens est supérieur au temps deuxième sens, cela signifie que le sens de rotation 1 ordonné par l'ULT correspond à un enroulement et que l'action effectuée est conforme à l'ordre reçu par l'ULT. L'automatisme conserve son affectation initiale : sur un ordre de montée, le moteur tourne dans son premier sens conséquent, dans son deuxième pour une descente. Cette affectation est stockée de façon permanente dans la mémoire MI inversion des ordres. La mémoire MI est consultée par l'intelligence de l'automatisme avant d'obéir à un prochain ordre.

Si par contre le temps premier sens est inférieur au temps deuxième sens, cela signifie que l'action effectuée est contraire à l'ordre reçu par l'ULT et cette dernière affecte alors un ordre de montée le deuxième sens et un ordre de descente le premier sens.

Dans l'organigramme de la figure 3, si le volet roulant rencontre une butée avant d'avoir effectué le déplacement significatif, le sens de rotation du moteur est alors inversé et le temps mis pour effectué le déplacement significatif est mesuré tout d'abord dans le deuxième sens, puis dans le premier sens.

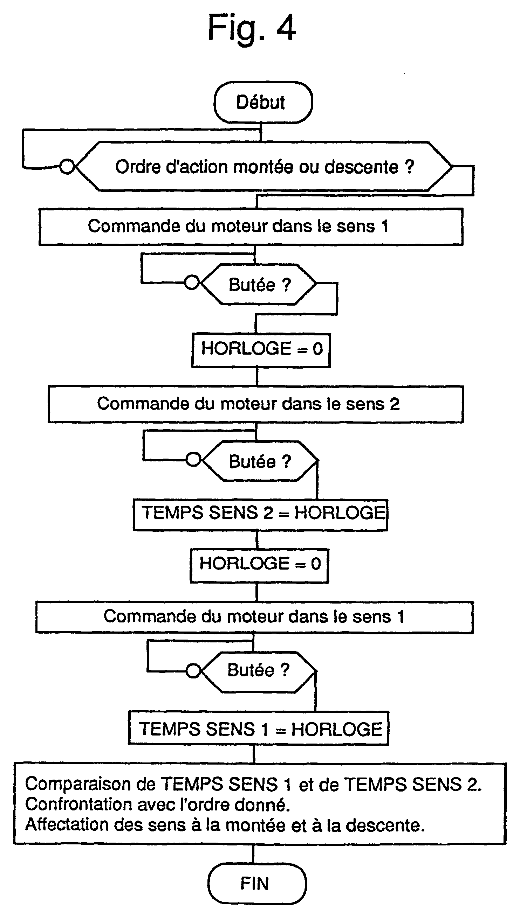

Au lieu que le déplacement significatif corresponde à un certain nombres de tours du tube d'enroulement, un tour dans l'exemple décrit, ce déplacement significatif pouvait être le déplacement du volet roulant entre une butée haute et une butée basse, plus particulièrement entre une butée haute correspond à un enroulement complet et une butée basse correspondant à un déroulement complet du volet roulant. Dans ce cas, le déplacement significatif est donc égal à la dynamique de travail du volet roulant. L'organigramme du programme de cette variante est représenté à la figure 4.

Supposons que l'utilisateur donne un ordre de montée au point de commande. L'automatisme, qui comprend que l'ordre est un ordre de montée, ordonne un mouvement dans le sens 1. Ce mouvement s'interrompt lorsque le volet roulant rencontre une butée. L'automatisme initialise alors l'horloge et ordonne au moteur d'inverser son sens de rotation et donc de tourner dans le sens 2.

Le mouvement s'interrompt lorsque le volet roulant rencontre à nouveau une butée. Le temps compté par l'horloge est sauvegardé dans la mémoire MT2 en tant que TEMPS SENS 2 et l'automatisme ordonne au moteur de tourner dans l'autre sens, c'est-à-dire le sens 1. Simultanément, l'horloge est ré-initialisée.

Le mouvement du volet roulant est à nouveau interrompu lorsque ce dernier rencontre à nouveau une butée et le temps mesuré dans l'horloge est sauvegardé dans la mémoire MT1 en tant que TEMPS SENS 1.

L'automatisme compare les TEMPS SENS 1 et TEMPS SENS 2 et confronte la différence avec l'ordre reçu, comme dans le mode d'exécution principal.

Un avantage de cette variante est qu'elle permet une reconnaissance des butées haute et basse en mémorisant les positions de compteur correspondantes.

Un autre avantage de cette variante est que quelque soit la masse du volet roulant, qui influence l'amplitude du déplacement à considérer comme significatif, le dispositif est dans des conditions optimum d'opération.

Au lieu de mesurer le temps mis par le volet roulant pour parcourir une distance significative, on peut inversement mesurer la distance parcourue par le volet roulant dans un intervalle de temps déterminé et fixe. A cet effet il est possible d'utiliser les mêmes moyens que ceux représentés à la figure 2. L'horloge servira à mesurer le temps fixe et les mémoires MT1 et MT2 serviront à sauvegarder les déplacements dans un premier sens et dans un second sens. Les impulsions émises par le codeur DC sont comptées par un compteur incrémental de déplacements élémentaires CI pour la mesure de l'espace parcouru par le volet roulant.

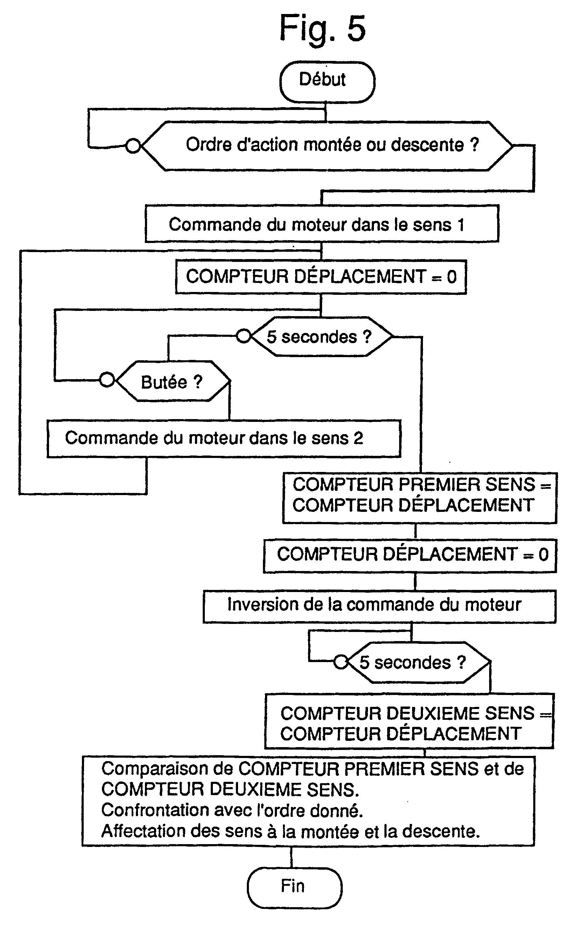

L'organigramme du programme d'exploration est représenté à la figure 5.

Supposons, comme dans les cas précédents, que l'utilisateur, lors de la mise sous tension de l'installation, donne un ordre de montée au point de commande. L'automatisme, qui comprend que l'ordre est un ordre de montée, ordonne un mouvement dans le sens 1 et initialise le compteur de déplacement.

Si après l'écoulement du temps fixe, cinq secondes dans l'exemple considéré, le volet roulant n'a pas rencontré de butée, le mouvement est interrompu et l'état du compteur de déplacement est sauvegardé dans la mémoire MT1.

Ensuite, l'automatisme initialise à nouveau le compteur de déplacement et ordonne au moteur de tourner dans l'autre sens, c'est-à-dire dans le deuxième sens.

Au bout de cinq secondes le mouvement s'interrompt et l'état du compteur de déplacement est sauvegardé dans la mémoire MT2.

Le processeur compare ensuite les valeurs mémorisée dans MT1 et MT2 et confronte la différence avec l'ordre donné.

Si la distance parcourue dans le sens 1 est inférieure à la distance parcourue dans le sens 2, le sens 1 correspond à un enroulement et le sens 2 à un déroulement et l'action effectuée, dans l'exemple considéré, correspond à l'ordre donné par l'utilisateur. L'automatisme affecte le sens 1 à un ordre de montée et le sens 2 à un ordre de descente.

Si par contre la distance parcourue dans le sens 1 est supérieure à la distance parcourue dans le sens 2 cela signifie que le sens 1 correspond à un déroulement du store et que l'action effectuée ne correspond à l'ordre donné par l'utilisateur. L'automatisme affecte alors le sens 2 à un ordre de montée et le sens 1 à un ordre de descente. Comme précédemment cette affectation est stockée dans la mémoire INVERSION DES ORDRES qui sera consultée par l'automatisme à la réception de tout ordre de montée ou de descente.

La grandeur représentative de la vitesse de rotation du moteur peut être obtenue de toute autre manière, par exemple au moyen d'un dispositif tachymétrique.

## Revendications

1. Dispositif de commande pour moteur asynchrone (M) à deux sens de rotation utilisé pour l'entraînement d'un store ou volet roulant (VR) se déplaçant au moins approximativement verticalement, comprenant un point de commande (PC) équipé de contacts Montée et Descente actionnables manuellement et dont l'actionnement assure la rotation du moteur dans le sens désiré, un boîtier de commande et d'alimentation (BC), contenant une unité logique de traitement (ULT), entre le point de commande et le moteur, des moyens de commutation commandés par l'unité logique de traitement pour l'alimentation de l'un ou l'autre des enroulements du moteur et des moyens d'établissement d'un sens de rotation du moteur correspondant respectivement aux ordres de montée et descente, **caractérisé en ce que** les moyens d'établissement d'un sens de rotation du moteur comprennent des moyens (ULT, H, DC) de reconnaissance du sens de déplacement du store ou volet roulant par la mesure d'une grandeur représentative de la vitesse de rotation du moteur et, dans l'unité logique du traitement, une mémoire de type EEPROM (MI) pour l'enregistrement de l'ordre de sens de rotation à donner au moteur en réponse à un ordre émanant du point de commande et un processeur programmé pour comparer le sens de déplacement reconnu avec l'ordre émanant du point de commande et pour inverser, si nécessaire, le sens de rotation enregistré pour cet ordre.

2. Dispositif selon la revendication 1, **caractérisé en ce que** les moyens de reconnaissance du sens de déplacement du store ou volet roulant sont constitués de moyens de mesure du temps (H, MT1, MT2) mis par le store ou volet roulant pour effectuer un déplacement significatif.

3. Dispositif selon la revendication 2, **caractérisé en ce que** lesdits moyens de mesure du temps sont constitués d'une horloge (H) initialisée à la réception d'un ordre de Montée et Descente et de moyens (DC) de mesure du déplacement significatif, les temps (MT1, MT2) comptés par l'horloge en montée et en descente étant comparés entre eux, le temps le plus court correspondant à la descente et le temps le plus long à la montée.

4. Dispositif selon la revendication 1, **caractérisé en ce que** les moyens de reconnaissance du sens de déplacement du store ou volet roulant sont constitués de moyens (H) de mesure du temps mis par le store ou volet roulant pour aller d'une butée basse à une butée haute et inversement.

5. Dispositif selon la revendication 4, **caractérisé en ce que** les moyens de mesure du temps sont constitués d'une horloge (H) initialisée à l'arrivée contre une butée, l'unité logique de traitement étant programmée de manière à commander la rotation du moteur en sens inverse lors de l'arrivée en butée, jusqu'à la fin de la mesure des temps de déplacement entre les butées, en descente et en montée.

6. Dispositif selon la revendication 1, **caractérisé en ce que** les moyens de reconnaissance du sens de déplacement du store ou volet roulant sont constitués de moyens (DC, CD) de mesure du déplacement du store ou volet roulant pendant un temps significatif.

7. Dispositif selon la revendication 6, **caractérisé en ce que** lesdits moyens de mesure du déplacement sont constitués d'un compteur incrémental de déplacements élémentaires (CI) initialisé à la réception d'un ordre de Montée et Descente et de moyens de comptage (H) d'un temps significatif, les déplacements comptés par le compteur de déplacement en montée et en descente étant comparés entre eux, le déplacement le plus court correspondant à la montée et le déplacement le plus long à la descente.

## Patentansprüche

1. Steuerungsvorrichtung für einen in beiden Richtungen drehenden Asynchronmotor (M) zum Antrieb eines Vorhangs oder Rolladens (VR), der sich wenigstens näherungsweise vertikal bewegt, mit einem Steuerungsplatz (PC), der mit Aufwärts- und Abwärts-Kontakten versehen ist, welche manuell betätigbar sind und deren Betätigung die Drehung des Motors im gewünschten Sinne bewirkt, mit einem Gehäuse zum Steuern und zur Speisung (BC), das zwischen dem Steuerungsplatz und dem Motor eine logische Verarbeitungseinheit (ULT) enthält, mit von der logischen Verarbeitungseinheit gesteuerten Schaltmitteln zur Speisung der einen oder der anderen Motorwicklung sowie mit Mitteln zum Einstellen einer Motordrehrichtung, entsprechend den Aufwärts- bzw. Abwärtsbefehlen, **dadurch gekennzeichnet, dass** die Mittel zum Einstellen einer Motordrehrichtung Erkennungsmittel (ULT, H. DC) zum Erkennen der Bewegungsrichtung des Vorhangs oder Rolladens durch Messung einer für die Motordrehzahl repräsentativen Grösse haben und in der logischen Verarbeitungseinheit einen Speicher vom Typ EEPROM (MI) zum Speichern des an den Motor zu gebenden Drehrichtungsbefehls als Antwort auf einen vom Steuerplatz kommenden Befehl sowie einen Prozessor aufweisen, der so programmiert ist, dass die erkannte Bewegungsrichtung mit dem vom Steuerplatz kommenden Befehl verglichen und, wenn erforderlich, für diesen Befehl die gespeicherte Drehrichtung umgekehrt wird.

2. Vorrichtung nach Anspruch 1, **dadurch gekennzeichnet, dass** die Erkennungsmittel zum Erkennen der Bewegungsrichtung des Vorhangs oder Rolladens aus Mitteln (H, MT1, MT2) zum Messen derjenigen Zeit bestehen, welche der Vorhang oder Rolladen braucht, um eine signifikante Bewegung auszuführen.

3. Vorrichtung nach Anspruch 2, **dadurch gekennzeichnet, dass** die erwähnten Mittel zur Zeitmessung aus einer Uhr (H), die beim Empfang eines Aufwärts- und Abwärtsbefehls initialisiert wird, und aus Mitteln (DC) zum Messen der signifikanten Bewegung bestehen, und dass die von der Uhr bei der Aufwärts- und Abwärtsbewegung gezählten Zeiten (MT1, MT2) miteinander verglichen werden, wobei die kürzere Zeit der Abwärtsbewegung und die längere Zeit der Aufwärtsbewegung entspricht.

4. Vorrichtung nach Anspruch 1, **dadurch gekennzeichnet, dass** die Erkennungsmittel zum Erkennen der Bewegungsrichtung des Vorhangs oder Rolladens aus Mitteln (H) zum Messen derjenigen Zeit bestehen, welche der Vorhang oder der Rolladen braucht, um von einem unteren Anschlag zu einem oberen Anschlag zu gelangen oder umgekehrt.

5. Vorrichtung nach Anspruch 4, **dadurch gekennzeichnet, dass** die Mittel zur Zeitmessung aus einer Uhr (H) bestehen, die beim Erreichen eines Anschlags initialisiert wird, und dass die logische Verarbeitungseinheit so programmiert ist, dass beim Erreichen des Anschlags ein Befehl zur Motordrehung im entgegengesetzten Sinne bis zum Ende der Messung der Zeit gegeben wird, die bei der Abwärts- und der Aufwärtsbewegung zwischen den Anschlägen verläuft.

6. Vorrichtung nach Anspruch 1, **dadurch gekennzeichnet, dass** die Mittel zur Erkennung der Bewegungsrichtung des Vorhangs oder Rolladens aus Mitteln (DC, CD) zur Messung der Bewegung des Vorhangs oder Rolladens während einer signifikanten Zeit bestehen.

7. Vorrichtung nach Anspruch 6, **dadurch gekennzeichnet, dass** die erwähnten Mittel zur Messung der Bewegung aus einem Inkrementalzähler der elementaren Bewegungen (CI), der bei Empfang eines Aufwärts- und Abwärtsbefehls initialisiert wird, und aus Mitteln zur Zählung (H) einer signifikanten Zeit bestehen, und dass die vom Bewegungszähler bei der Aufwärts- und der Abwärtsbewegung gezählten Bewegungen miteinander vergleichen werden, wobei die kürzere Bewegung der Aufwärtsbewegung und die längere Bewegung der Abwärtsbewegung entspricht.

## Claims

1. Control device for asynchronous motor (M) with two directions of rotation, used for driving a shutter or roller blind (RB) displacing at least approximately vertically, comprising a control point (CP) equipped with manually actuable Up and Down contacts, the actuation of which causes the rotation of the motor in the desired direction, a control and supply box (CB), containing a logic processing unit (LPU), between the control point and the motor, switching means controlled by the logic processing unit for supplying one or the other of the windings of the motor and means for establishing a direction of rotation of the motor corresponding respectively to the up and down instructions, **characterized in that** the means for establishing a direction of rotation of the motor comprise means (LPU, CLK, DC) for recognizing the direction of displacement of the shutter or roller blind through the measurement of a quantity representative of the speed of rotation of the motor and, in the logic processing unit, a memory of EEPROM type (MI) for recording the direction of rotation instruction to be issued to the motor in response to an instruction emanating from the control point and a programmed processor for comparing the recognized direction of displacement with the instruction emanating from the control point and for reversing, if necessary, the direction of rotation recorded in respect of this instruction.

2. Device as claimed in claim 1, **characterized in that** the means for recognizing the direction of displacement of the shutter or roller blind consist of means for measuring the time (CLK, MT1, MT2) taken by the shutter or roller blind to perform a significant displacement.

3. Device as claimed in claim 2, **characterized in that** said means for measuring the time consist of a clock (CLK) initialized on reception of an Up and Down instruction and of means (DC) for measuring significant displacement, the up and down times (MT1, MT2) counted by the clock being compared, the shorter time corresponding to down and the longer time to up.

4. Device as claimed in claim 1, **characterized in that** the means for recognizing the direction of displacement of the shutter or roller blind consist of means (CLK) for measuring the time taken by the shutter or roller blind to go from a bottom stop to a top stop and vice versa.

5. Device as claimed in claim 4, **characterized in that** the means for measuring the time consist of a clock (CLK) initialized on arrival against a stop, the logic processing unit being programmed in such a way as to operate the rotation of the motor in the reverse direction upon arrival at the stop, until the end of the measurement of the up and down times of displacement between the stops.

6. Device as claimed in claim 1, **characterized in that** the means for recognizing the direction of displacement of the shutter or roller blind consist of means (DC, CD) for measuring the displacement of the shutter or roller blind for a significant time.

7. Device as claimed in claim 6, **characterized in that** said means of measuring the displacement consist of an incremental counter of elementary displacements (IC) initialized on reception of an Up and Down instruction and of means (CLK) for counting a significant time, the displacements counted by the up and down displacement counter being compared, the shorter displacement corresponding to up and the longer displacement to down.
